# EUROPEAN PATENT APPLICATION

(11) **EP 4 704 006 A1**
(43) Date of publication of application: **04.03.2026**
(21) Application number: 24196633.2
(22) Date of filing: 27.08.2024
(51) Int. Cl.: G06Q 20/02, G06Q 20/10, G06Q 20/40

(54) **SECURE TRANSACTION METHOD AND SYSTEM**

(71) Applicant: Mastercard International Incorporated, Purchase NY 10577 (US)
(72) Inventor: BOSSE, Harold, Tunbridge Wells, TN1 2DB (GB); PARKINSON, Ben, London, E10 5RQ (GB); RUSSELL, Ian, London, E14 3BY (GB); GOPALAN, Lavanya, Belfast, BT5 7TH (GB); SPENCE, Liam, York, YO26 6PX (GB); CUMISKEY, Eoin, London, KT4 8LA (GB); CUSHING, David, London, SE5 9NR (GB)
(74) Representative: Gill Jennings & Every LLP

(57) **Abstract**

A secure transaction system and method is disclosed which uses a central service entity and central settlement entity to perform a payment transaction between a customer of a sending participant entity and a customer of a receiving participant entity. The central settlement entity is configured to create an earmark to secure and control the intended payment funds of the sending participant entity and to transfer the payment funds after the receiving participant entity confirms funds have been successfully credited to its customer.

## Description

### FIELD OF THE INVENTION

The invention relates to a computer-implemented secure transaction system and method for processing payment transactions.

### BACKGROUND

In known transaction systems, a settlement process (which is the transfer of money between financial institutions) occurs in a sequential manner, where funds intended for a payment transaction are moved through a payment pathway after which a clearing process is performed by the recipient beneficiary bank to assess whether the payment instruction can be completed. This can sometimes result in the beneficiary bank holding funds to which it is not entitled (due to a failure in the clearing process) and for which there are, in many cases, no laws or commercial agreements that describe a speedy resolution process. As a result, it may take a day or more for payment transactions to eventually be credited to the intended beneficiary or for the payment funds to be returned to the sender, or, rarely, the funds may go missing.

The present invention aims to solve one or more of the problems mentioned above to provide an improved transaction system and method, which can advantageously allow a cross-border payment transaction to be completed in near real time, 24/7.

### SUMMARY OF INVENTION

According to a first aspect of the invention, there is provided a computer-implemented secure transaction processing method, the method performed by a central service entity and comprising the steps of: receiving, from a first participant entity, a payment instruction message for a payment transaction from the first participant entity to a second participant entity, the payment transaction comprising a payment amount value; sending a first earmark instruction message to a central settlement entity to create an earmark associated with the payment transaction, wherein the earmark is configured to secure the payment amount value from the first participant entity and to reserve the payment amount value for the second participant entity; receiving, from the central settlement entity, a first earmark confirmation message confirming that the earmark has been successfully created; pairing the first earmark confirmation message with the payment instruction message; sending, to the second participant entity, a credit instruction message comprising the paired earmark confirmation message and the payment instruction message; receiving, from the second participant entity, a credit confirmation message, wherein the credit confirmation message comprises a clearing indication of whether the payment amount value has been credited by the second participant entity to the account of its customer; sending, to the central settlement entity, a second earmark instruction message, wherein the second earmark instruction message comprises an instruction to release the earmark to complete settlement of the payment transaction or to cancel the earmark to return the secured funds to the control of the first participant entity; and receiving, from the central settlement entity, a second earmark confirmation message confirming whether the instructed release or cancellation of the earmark was completed successfully.

In this way, a payment and the associated settlement can be completed in an instant or near-instant and secure manner from a customer of the first participant entity to a customer of the second participant entity without being unnecessarily held or delayed at an intermediate location. The central service entity of the present invention ensures that a transaction route, or transfer process, is verified and cleared before instructing the central settlement entity to effect the transfer of funds. Both the first and second participant entities hold an account with the central settlement entity. The central settlement entity effects settlement by moving money from the account of the former to the account of the latter. Therefore, the central service entity orchestrates the events in the payment transaction to enable a binary outcome, where a payment transaction is either rejected without the movement of funds or the payment and associated settlement are completed, both within seconds. Advantageously, the present invention improves cross-border payments because the payment pathway is typically more complex than for domestic payments. Preferably, the present secure transaction processing method is a cross-border secure transaction processing method.

A "payment transaction" involves two separate aspects: (1) a "payment" from the bank account of the sender/payer to the bank account of the beneficiary/payee; and (2) a "settlement", or transfer of funds, between the sender's bank and the beneficiary's bank, if and only if these banks are different. Settlement may sometimes pass via one or more intermediary banks.

Advantageously, the present invention allows real-time payment transactions to take place at any time across a network and improves the security and confidence of customers in payment networks by enhancing visibility and transparency of transactions. Accordingly, the messaging employed in the present transaction system removes any risk and uncertainty, and imposes the requirement that the generation of responses to messages be fully automated and efficiently completed, e.g. within seconds.

An earmark is used to lock the funds of the first participant entity, i.e. the sending participant, held at a central settlement entity. The central service entity will only instruct the release of the earmark and the funds when the payment path to the customer account of the second participant entity, i.e. the receiving participant, has been successfully verified and cleared. In other words, the earmark allows the payment funds intended for transfer to remain in the account of the sending participant at the central settlement entity until the receiving participant securely confirms that it is able to receive the funds on behalf of its customer. As should be appreciated, the use of an earmark, rather than directly transferring funds to an intermediary or intermediate location, minimises the risk of errors in transfer, such as wrong destinations, or illegitimate activity, such as theft or misuse of intended funds by the intermediary / from the intermediate location. Another risk to the sending participant in known systems is counterparty risk, where the intended receiver of the payment has not been credited even after payment funds have exited from the sending participant's account.

The central service entity therefore orchestrates the payment transaction by receiving instruction and information messages from, and sending instruction and information messages to, the different entities, i.e. the sending entity, the receiving entity, the central settlement entity, and any other intermediary entities, to provide a resilient and transparent framework. In order for a participant entity to request or receive a payment transaction through the present secure transaction system (using the present method), the participant entity is required to enrol with the central service entity. For example, a participant entity may be required to undergo a background check and allow the central service entity or the central settlement entity access to certain information. The participant entity must be configured, following the sending of a payment instruction message, to allow the central settlement entity to secure / lock funds intended for a payment transaction and for the central service entity to have sole authority to instruct the release of those funds to the receiving entity or return them to the control of the sending entity if the payment transaction is cancelled.

In the present invention, the central service entity ensures that a payment pathway is clear (known as clearing) by sending a credit instruction message, i.e. attempting to credit, the customer account of the second participant entity. If the second participant entity is able to successfully credit the intended beneficiary (i.e. customer account of the second participant entity), the payment pathway is clear between the customer account of the first participant entity and the customer account of the second participant entity and a credit confirmation message is received by the central service entity. The earmark, created by the central settlement entity, can now be released and allow funds according to the payment amount value to be transferred from the first participant entity to the second participant entity without any hold-up or delay in the transaction.

Preferably the method further comprises: sending, to the first participant entity, a first payment transaction confirmation message; and/or sending, to the second participant entity, a second payment transaction confirmation message. In this way, the first participant entity and/or the second participant entity can be effectively informed that the payment transaction is successful. If the first participant entity did not debit an instructing sender (e.g. the person or company seeking to make the payment) it can securely do so after receiving confirmation that the payment transaction is complete. Similarly, if the second participant entity did not make funds available to a recipient beneficiary (e.g. the intended person or company to receive the payment from the instructing sender) it can also securely do so after receiving confirmation that the payment transaction is complete.

Preferably, the first earmark instruction message is sent to the central settlement entity by the first participant entity. The central service entity may request the first participant entity to instruct the creation of an earmark such that a direct instruction is received from the first participant entity by the central settlement entity. Alternatively, the central service entity, on behalf of the first participant entity, may directly instruct the central settlement entity to create an earmark.

Preferably, the method further comprises: creating a payment object to store content of the payment instruction message received from the sending participant entity; and validating the content of the payment object. In this way, the central service entity may receive payment instruction messages in different formats, according to a sending participant entity's normal processing methods, which may or may not be the same as the format of the payment object. Similarly, the central service entity may send payment instruction messages of a variety of formats/schemes according to a receiving participant entity's normal processing methods. The central service entity may be considered as a multi-lateral platform which orchestrates payments between different banks (i.e. participant entities) locally and globally and so effectively acts as an intermediate entity through which all the sender and receiver banks (entities participating in this secure transaction system) communicate (i.e. a many-to-one approach), rather than them communicating between each other (i.e. a many-to-many approach).

Preferably, the method further comprises: sending, to the second participant entity, a pre-validation request; receiving, from the second entity, a pre-validation response to confirm that the pre-validation check is successful; and sending, to the first participant entity, a pre-validation confirmation message. In this way, a pre-clearance of the transaction can take place before an earmark is created and identify/detect any potential impediments or issues that may prevent a payment transaction from completing. Advantageously, a transaction process may be more efficiently terminated and unnecessary messages may be prevented, thereby optimising the system and network.

Preferably, the credit confirmation message is received within a predetermined time period from the sending of the credit instruction message. In this way, the central service entity can effectively determine whether a payment transaction will be rapidly completed to provide an "instant payment system". As explained above, any delay or hold-up between entities increase the risk of failure, and therefore the present disclosure allows transactions to be processed in predetermined time periods. As will be understood, a predetermined time period is an amount of time that is preset, selected or fixed for a key pair to define a period of validity (e.g. for the receiving participant entity to confirm that it can be credited). Preferably, the predetermined time period is thirty seconds. Alternatively, the predetermined time period may be longer or shorter, for example 5 seconds, 20 seconds, or one minute. Importantly, the present disclosure ensures that a payment transaction process runs smoothly and quickly between the participant entities and minimises the holding of the payment funds in an intermediate state. According to the system of the present disclosure, payments are never held in an indeterminate state. In other words, the central service entity is aware of a payment state at all times. On receipt of the credit confirmation message, the payment transaction is advanced from the "earmarked" state (an intermediate state) to the "completed" state or "rejected" state (which are both terminal states).

Preferably, the method further comprises communicating with a first intermediary entity between the first participant entity and the central settlement entity and/or a second intermediary entity between the second participant entity and the central settlement entity to process the payment transaction. In some examples, the payment funds for the payment transaction may be provided by an intermediary entity associated with the first participant entity. This intermediary entity may be a sponsor entity with more available funds than the first participant entity.

Similarly, the intermediary entity may be a sponsor entity associated with the second participant entity to receive the payment transaction on behalf of the second participant entity.

According to a second aspect of the invention, there is provided a computer-implemented secure transaction processing method, the method performed by a central settlement entity and comprising the steps of: receiving a first earmark instruction message to create an earmark associated with a payment transaction from a first participant entity to a second participant entity, the payment transaction comprising a payment amount value, wherein the earmark is configured to secure the payment amount value from the first participant entity and to reserve the payment amount value for the second participant entity; verifying the payment amount value with an available funds value associated with the first participant entity; if the payment amount value is successfully verified, the method further comprising: creating the earmark; sending, to a central service entity, a first earmark confirmation message to confirm that the earmark has been successfully created; receiving, from the central service entity (and no other entity), a second earmark instruction message, wherein the second earmark instruction message comprises an instruction to release the earmark to complete settlement of the payment transaction or to cancel the earmark to return the earmarked funds to the control of the first participant entity; releasing or cancelling the earmark to allow the payment transaction to complete or to return the secured payment amount value to the control of the first participant entity; sending, to the central settlement entity, a second earmark confirmation message confirming whether settlement of the payment transaction has been completed or cancelled.

In this way, the central settlement entity works with the central service entity of the first aspect to provide a secure transaction processing method and system to ensure that a payment pathway / transaction route is clear before any funds move from a first sending participant entity.

Preferably, the method further comprises: sending, to the first participant entity, the first earmark confirmation message and/or the second earmark confirmation message; and/or sending, to the second participant entity, the second earmark confirmation message. In this way, the central settlement entity can confirm with the respective participant entities that an earmark has been successfully created, released, and/or cancelled.

Preferably, verifying the payment amount value comprises verifying the payment amount value of a first intermediary entity, wherein the first intermediary entity is associated with the first participant entity. In this way, an intermediary entity, such as a sponsor entity, may provide funds to be earmarked and used in settlement of the payment transaction on behalf of the first participant entity.

Preferably, if the payment amount value is not successfully verified, the method comprises responding to the first earmark instruction message with an earmark rejection message. In this way, the central service entity may terminate the payment transaction process associated with the payment instruction message received by the central service entity in the first aspect of the invention.

Preferably, releasing the earmark comprises transferring the payment amount value from the first participant entity or a first intermediary entity associated with the first participant entity to the second participant entity or a second intermediary entity associated with the second participant entity. In this way, the settlement funds for the payment transaction may move from the first participant entity to the second participant entity, or their respective agents, through their respective accounts at the central settlement entity in an efficient and secure manner.

According to a third aspect of the invention, there is provided a transaction processing system for performing secure payment transactions between a first participant entity and a second participant entity, wherein the transaction processing system comprises a central service entity configured to perform the method of the first aspect and a central settlement entity configured to perform the method of the second aspect. Preferably, the transaction processing system is a cross-border transaction processing system for performing cross-border payment transactions.

According to a fourth aspect of the invention, there is provided a non-transitory computer-readable medium storing instructions that are operable when executed by data processing apparatus in a transaction processing system to perform the method of the first and/or second aspects.

### BRIEF DESCRIPTION OF DRAWINGS

Embodiments of the present invention are described below, by way of example only, with reference to the accompanying drawings, in which:
Figure 1 illustrates a schematic flow diagram of a known payment communications network system;
Figure 2 illustrates a schematic flow diagram of the secure payment transaction system according to the present invention;
Figure 3 illustrates a schematic flow diagram showing an exemplary method for carrying out an aspect of the present invention; and
Figures 4a, 4b, 4c and 4d illustrate schematic flow diagrams of the secure payment transaction systems according to further aspects of the present invention.

### DETAILED DESCRIPTION

Various aspects of the invention are now described with reference to the accompanying drawings. The description and specific examples included herein are intended for purposes of illustration only and are not intended to limit the scope of the present disclosure. The following description is presented to enable any person skilled in the art to make and use the system, and is provided in the context of a particular application. Various modifications to the disclosed embodiments will be readily apparent to those skilled in the art.

As used herein, the following terms have the following meanings:

A "central service entity" is a central platform in the present centralised transaction service, in which the central service entity orchestrates the message communications and transactions between participants / participant entities that have registered to the transaction service. The central service entity also sends and receives messages with a central settlement entity in order to complete or cancel the payment transactions. To put it in another way, the central service entity may be considered as a multi-lateral platform which controls and communicates with the different entities in the present secure transaction system.

A "central settlement entity" is part of the centralised transaction service that controls the transfer of payment funds associated with a payment transaction by creating, releasing, or cancelling "earmarks".

A "participant entity" is a registered user of the centralised transaction service. The participant entity may be a bank or other form of financial institution through which consumers / customers / account holders of a financial institution can send and receive payment or funds to and from account holders of a same or other financial institutions. In order for the central service entity to effectively act and communicate across all the participant entities, each participant entity must be registered with the central service entity.

An "intermediary entity" may be another participant entity that acts on behalf of a particular participant entity. For example, an intermediary entity may be a sponsor bank or financial institution to support indirect participation. The sponsor financial institution may have a larger financial capacity to manage liquidity to support the participant entity, which itself may be a smaller bank. Other examples of an intermediary entity may be another payment service provider (PSP) or settlement system which communicates with the central service entity and the central settlement entity.

An "earmark" is a function, created by the central settlement entity, that causes funds relating to a payment amount value associated with a payment instruction to be set aside (i.e. earmarked, or reserved and 'locked') and to be controlled by the central settlement entity for a payment transaction. The transfer of the earmarked funds from a sending participant entity to a recipient participant entity does not take place until the earmark is released by the central settlement entity on the instruction of the central service entity. If the central service entity instructs the central settlement entity to cancel the earmark, it indicates that the clearing or validation process has failed, and the earmarked funds do not get transferred. On cancellation of the earmark, control of the previously earmarked funds is returned to the sending participant entity.

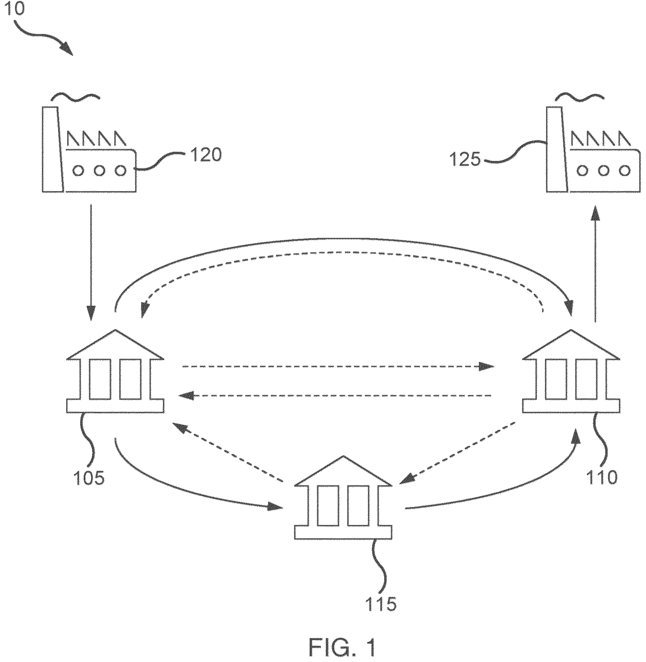

Figure 1 shows a known payment communications network system 100, which is used to perform payment transactions and cross-border payment transactions. The known network system 100 includes an originating bank 105, a receiving bank 110 and a correspondent bank 115. A sender 120 is an account holder of the originating bank 105 and issues a payment instruction to the originating bank 105 to send a payment to a beneficiary 125. The beneficiary 125 is an account holder of the receiving bank 110. In some cases, for example in cross-border transactions, settlement of the payment occurs via the correspondent bank 115 which communicates with, and operates accounts for, both the originating bank 105 and the receiving bank 110. In this known system, the originating bank 105 debits the sender 120 after receiving and validating the payment instruction. The payment transaction process then typically proceeds in two possible ways.

In a first method, known as the 'serial method', the originating bank 105 sends a combined payment instruction and settlement instruction to the correspondent bank 115. The payment and settlement instruction may be in the MT103 or pacs.008 format (or variants thereof). Settlement takes place at the correspondent bank 115 between an account of the originating bank 105 and an account of the receiving bank 110, and if settlement occurs the correspondent bank 115 forwards the payment instruction to the receiving bank 110.

The receiving bank 110 will attempt to credit the account of the beneficiary 125 in a process known as "clearing". At this stage a request for information may be issued, where the receiving bank 110 may communicate with the originating bank 105 to seek and receive additional details, as required. The receiving bank 110 will either credit the beneficiary account or instruct the correspondent bank 115 to return the settlement funds to the originating bank 105 if the payment could not be completed. The correspondent bank 115 returns the payment funds to the originating bank 105 if the payment could not be completed and advises the originating bank 105 accordingly.

In a second method, known as the 'cover and pay method' or the 'direct and cover method', after validating the payment instruction and debiting the sender account, the originating bank 105 sends a payment instruction directly to the receiving bank 110. The payment instruction may be in the MT103 or pacs.008 format (or variants thereof). At the same time, the originating bank 105 sends a settlement instruction to the correspondent bank 115, and the settlement process continues in a similar way as described with the first method. The settlement instruction may be in the MT202COV or pacs.009cov format (or variants thereof). A difference in this second method is that if settlement occurs the correspondent bank 115 sends a settlement confirmation message to the receiving bank 110. The settlement confirmation message may be in the MT910 or camt.054 format (or variants thereof). On receipt of both the payment instruction and the settlement confirmation message, the receiving bank 110 executes the clearing process similar to the first method.

In this second method, there is more direct communication between the originating bank 105 and the receiving bank 110, but the movement of payment funds (i.e. settlement) still takes place through the correspondent bank 115 before the payment transaction pathway between the sender 120 and the beneficiary 125 is cleared. Accordingly, both the first and second method lead to counterparty risk and may lead to delay.

The secure payment transaction system of the present disclosure, as will be described below, includes additional processing steps over known methods, which advantageously and counterintuitively allow the system to work more quickly and securely.

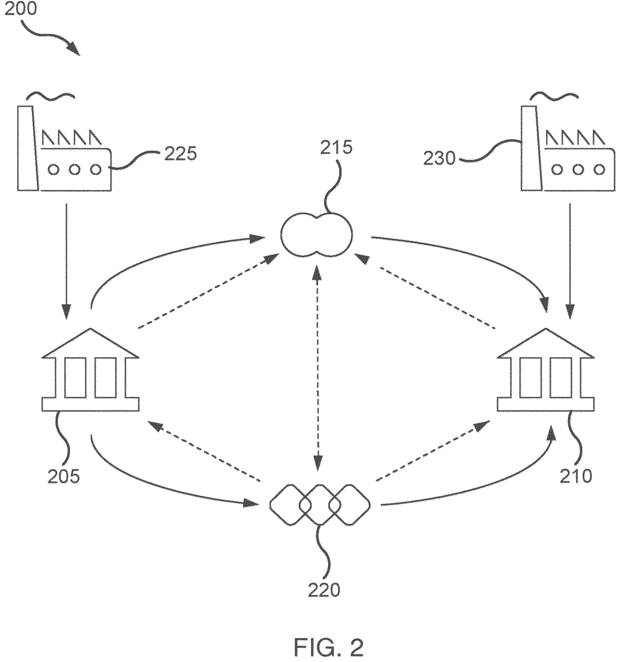

Figure 2 shows the secure payment transaction system 200 of the present disclosure for performing payment transactions and cross-border payment transactions. The secure payment transaction system 200 includes a first participant entity 205 which is the originating bank or financial institution and a second participant entity 210 which is the receiving bank or financial institution.

The transaction system 200 further comprises a central service entity 215, also known as a multi-lateral platform, and a central settlement entity 220. A sender 225 is an account holder of the first participant entity 205 and issues a payment instruction to the first participant entity 205 to send a payment to a beneficiary 230. The beneficiary 230 is an account holder of the second participant entity 210. The sender 225 and the beneficiary 230 interact or communicate with their respective banks or financial institutions using existing and known techniques. When the sender 225 wishes to make a payment to the beneficiary 230 using the present transaction system 200, the sender 225 creates a payment instruction using normal channels with the first participant entity 205. The first participant entity 205 may verify whether the sender 225 has sufficient funds, but the sender 225 is not required to debit the sender's account, but may lock the sender's funds required for the payment according to the first participant entity's own procedures.

The present transaction system is configured to reuse existing messaging formats and transmission mechanisms to dramatically lower cost, time and risk for banks or financial institutions. The central service entity may include additional information within the existing formats, extending their use beyond that for which they were developed by the banking community. For example, the messages between the entities may include a codeword which indicates that the instruction must be processed in a particular way as defined and as agreed with the operators of the present transaction system. By re-arranging and adding steps prior to settlement in comparison with the process today, the present transaction system eliminates the need for a return of funds process if a payment is rejected by a receiving participant. This is critical in eliminating credit (counterparty) exposure between the sending participant and the receiving participant.

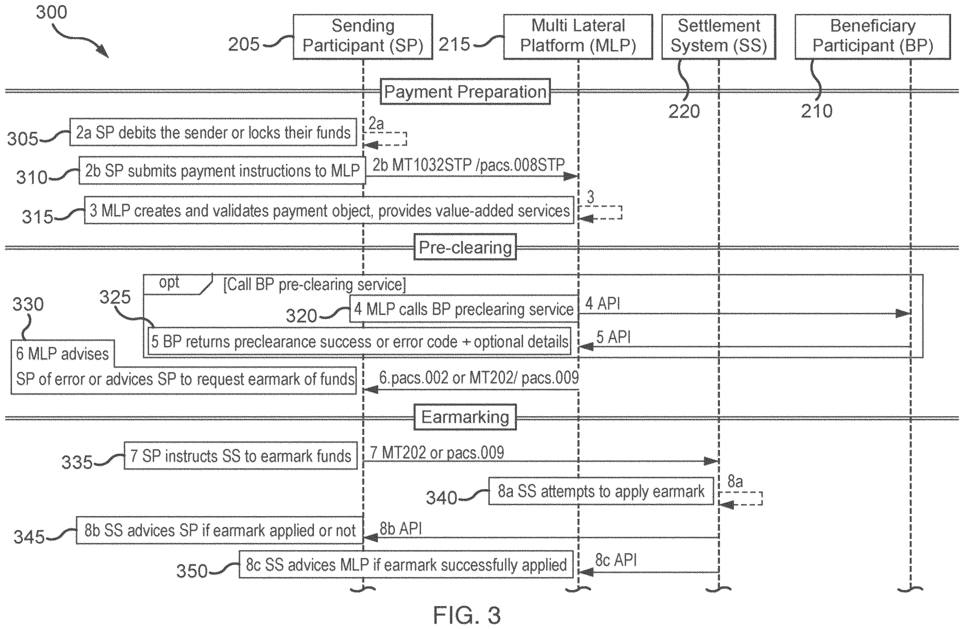

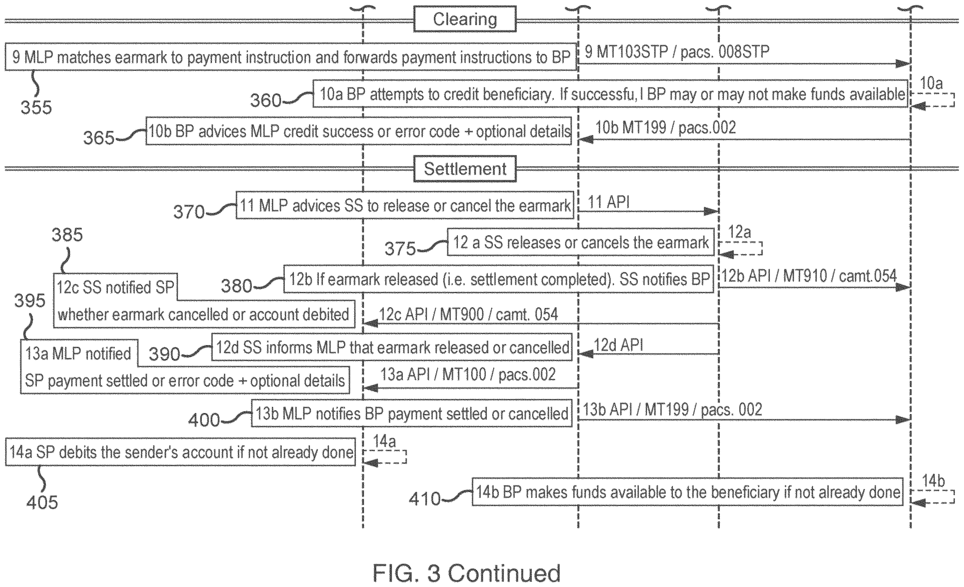

The first participant entity 205 will then proceed according to the method flow diagram 300 shown in Figure 3 to complete a payment transaction from the sender 225 to the beneficiary 230. The first participant entity 205 is also known as the sending participant entity and the second participant entity 210 is also known as the beneficiary participant entity or receiving participant entity.

On receiving a payment instruction from the sender 225, at step 305 the first participant entity 205 debits or locks the intended payment funds (according to a payment amount value) from the sender's account with the first participant entity 205. At step 310 the first participant entity 205 then creates a payment instruction message for the sender 225 and sends the payment instruction message to the central service entity 215.

The central service entity 215, or multi-lateral platform, receives the payment instruction message at step 315 and optionally may create and validate a payment object in accordance with a universal scheme or format of the secure transaction system 200. Since all participant entities must register with the transaction system 200 the central service entity is able to provide messages to the respective participant entities in a format that is readily operable by the respective entities. At step 315, the central service entity 215 may optionally provide further value-added services to the payment object (such as fraud detection and money laundering risk analysis).

Optionally, the central service entity 215 may perform a pre-clearance process with the second participant entity 210 where at step 320 the central service entity 215 sends a pre-validation or pre-clearance request message to the second participant entity 210. The pre-clearance process is configured to detect most impediments that may arise in a payment transaction pathway, but may not include a full compliance check. At step 325, the second participant entity returns a pre-validation or pre-clearance response message to confirm whether the pre-clearance check is successful or not. If pre-clearance is performed, the central service entity 215 may advise the first participant entity 205 whether the pre-clearance was successful or whether additional information may be required.

At step 330 the central service entity 215 advises the first participant entity 205 to request an earmark, where the first participant entity 205 is required to send an earmark instruction message to the central settlement entity 220 at step 335. The central service entity 215 may advise the first participant entity 205 using a message in the pacs.002 or MT202 / pacs.009 format. Alternatively, the central service entity 215 may, on behalf of the first participant entity 205, send the earmark instruction message directly to the central settlement entity 220. At step 335, the central settlement entity 220 receives the earmark instruction message. The earmark instruction message may comprise a MT202 or pacs.009 format.

The earmark instruction message at step 335 may comprise a codeword which indicates that the instruction must be processed by the central settlement entity 220 as defined within the rules of the central settlement entity 220 and as agreed with the operators of the central service entity 215.

At step 340, the central settlement entity 220 attempts to apply or create an earmark. In order for the earmark to be created, the central settlement entity 220 ensures that the first participant entity 205 holds with the central settlement entity 220 sufficient funds according to the payment amount value. The central settlement system 220 sets aside / locks these funds for the payment transaction. The created earmark then gives the central settlement entity 220 control of the locked funds, whilst the funds remain in the account of the first participant entity 205 until the earmark is released or unless the earmark is cancelled by the central settlement entity 220.

The central settlement entity 220 automatically rejects any earmark request if payment amount value exceeds the first participant entity's 205 available funds balance at the moment of receipt of the earmark request. In order to optimise efficiency and transparency, the present transaction system is configured to not provide a queuing facility / function so sending participant entities must ensure that they have sufficient funds before issuing an earmark request.

If the central settlement entity 220 successfully creates the earmark, the central settlement entity 220 advises the first participant entity 205 at step 345 and the central service entity 215 at step 350 of the created earmark by sending respective earmark confirmation messages to the first participant entity 205 and the central service entity 215.

On receipt from the central settlement entity 220 of a successful earmark confirmation message, the central service entity 215 proceeds to perform a clearing process. At step 355, the central service entity 215 matches the received earmark confirmation message from the central settlement entity 220 with the payment instruction message from the first participant entity 205 or the payment object (created at step 315) and sends a credit instruction message to the second participant entity 210. The credit instruction message may comprise the earmark confirmation message and the payment instruction message. The credit instruction message may comprise a MT103STP or pacs.008STP format.

At step 360 the second participant entity 210 attempts to credit the beneficiary account, securely knowing that the intended funds have been earmarked by the central settlement entity 220, and at step 365 the second participant entity 210 sends a credit confirmation message to the central service entity 215 to confirm whether the beneficiary account has been successfully credited or not. The credit confirmation message may comprise a MT199 or pacs.002 format.

In order to ensure that the transaction method and system is efficient and "near-instant", a predetermined or preset time period may be set by the central service entity 215 to ensure that a successful credit confirmation message is received within the predetermined time period. For example, the preset time period may be 5, 10, 15 or 30 seconds. If the second participant entity 210 cannot successfully credit the beneficiary account and inform the central service entity 215 in this time, the payment transaction process is terminated.

If the credit confirmation message indicates that the beneficiary account has been successfully credited, the central service entity 215 at step 370 sends a second earmark instruction message to the central settlement entity 220 to release the earmark to allow the earmarked funds to be transferred to the account of the second participant entity 210. Otherwise, at step 370 the central service entity 215 sends an earmark instruction message to the central settlement entity 220 to cancel the earmark such that control of the earmarked funds of the first participant entity 205 is returned to the first participant entity 205. Accordingly, at step 375 the central settlement entity 220 releases or cancels the earmark.

After the earmark has been released or cancelled, the central settlement entity 220 then proceeds to send confirmation messages to: the second participant entity 210 at step 380; the first participant entity 205 at step 385; and the central service entity 215 at step 390. The central service entity 215 also informs the first participant entity 205 at step 395 and the second participant entity at step 400 that the payment transaction has been completed or has been cancelled.

At step 405, the first participant entity 205 may debit the sender's account if it had previously only locked the funds. At step 410, the second participant entity 210 may make the received payment funds available to the beneficiary 230 if it has not done so previously.

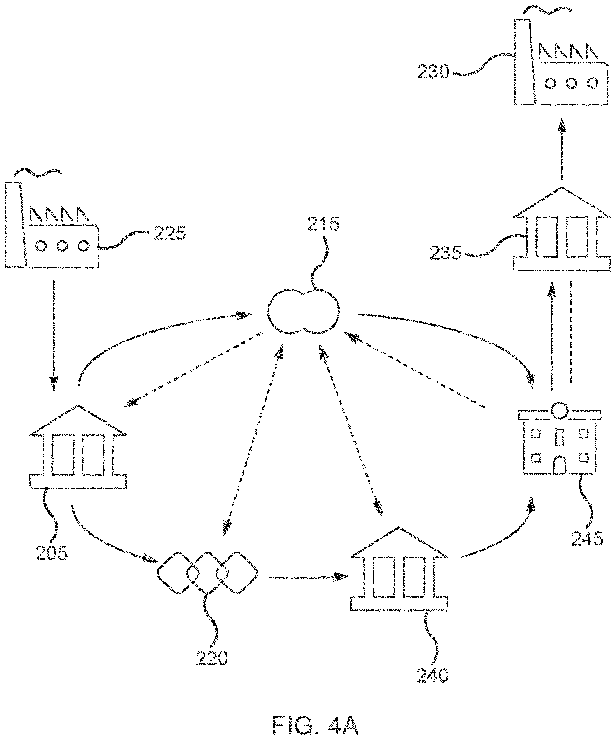

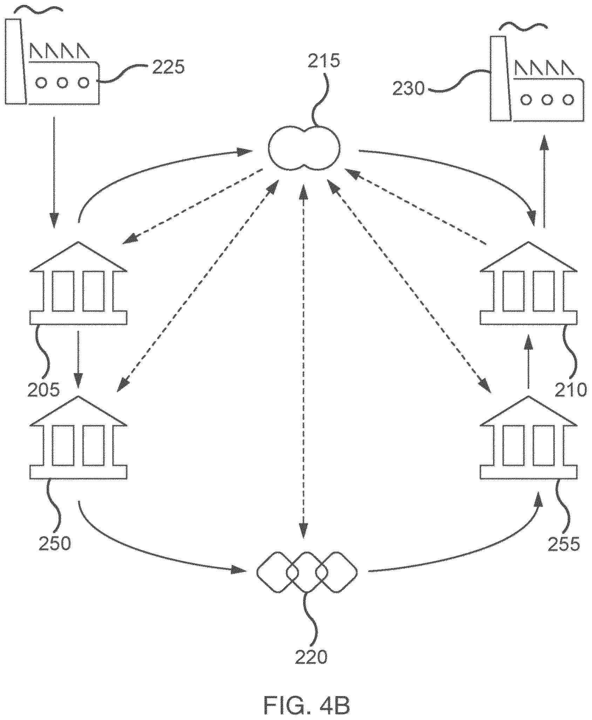

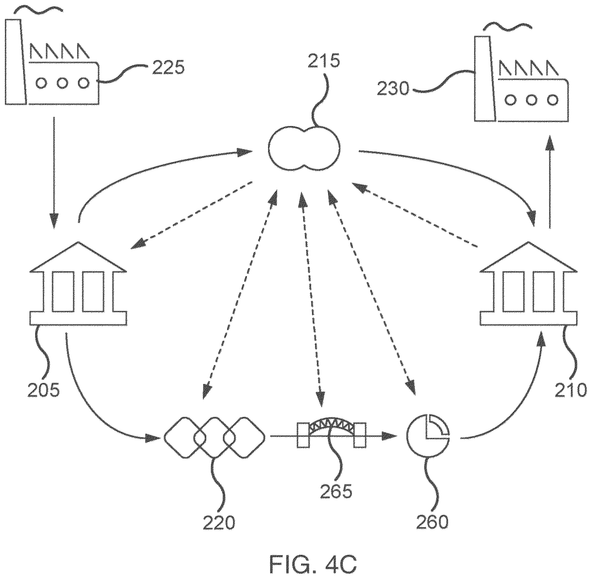

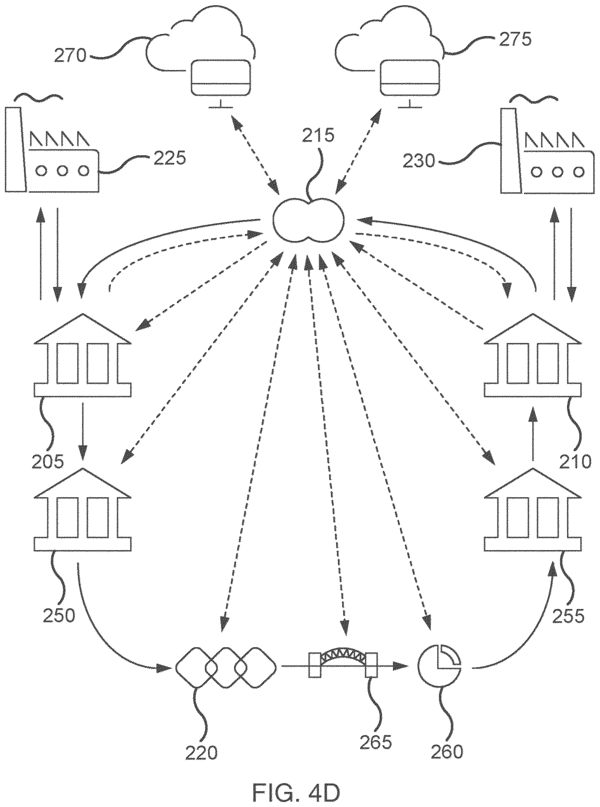

Figures 4a, 4b, 4c and 4d show the present transaction system 200 in different configurations where the system is extended to support indirect participation. In each case, each participant entity must be registered with the central service entity 215.

In Figure 4a, a beneficiary 230 may have an account with a bank or financial institution 235 that is not registered with the central service entity 215 and therefore the bank 235 cannot directly communicate with the central service entity 215. The central service entity 215 and the central settlement entity 220 may then communicate with an intermediary participant entity 240 that is registered with the central service entity 215 and may further utilise a further intermediary participant entity 245 (which may be a payment service provider having an agreement or arrangement with the beneficiary's bank 235) to complete a payment transaction. The present transaction system ensures transparency and near-instant movement of funds between registered participant entities.

In Figure 4b, the sender 225 may have an account with the first participant entity 205, where the first participant entity 205 may not have the available funds capacity to manage liquidity and the movement of payment funds on a global basis in a continuous (i.e. 24 hours 7 days a week) manner. Therefore the first participant entity 205 has an arrangement with a first sponsor entity 250 which is also a registered participant entity with the central service entity 215. The earmarking of funds is performed at the first sponsor entity 250 and also the central settlement entity 220.

In a similar way, the beneficiary 230 may have an account with the second participant entity 210, where the second participant entity 210 may not have the capacity to receive payment funds on a global and continuous basis. As such, the second participant entity 210 may also have an arrangement with a second sponsor entity 255, where the second sponsor entity 255 is also a registered participant entity with the central service entity 215. In performing a pre-clearance and/or a credit check, the central service entity 215 may communicate and send the relevant messages to the second sponsor entity 255 directly as well as the second participant entity 210.

In Figure 4c, the transaction system may be extended to support multiple settlement entities, where a second central settlement entity 260 is also provided and where the central service entity 215 ensures that communications between the first central settlement entity 220 and the second central settlement entity 260 are properly processed before payment funds and a payment transaction is completed. The central service entity 215 thereby acts as a bridge 265 between the first central settlement entity 220 and the second central settlement entity 260. In this model, instead of payments being processed sequentially through the settlement chain, all participant entities may examine the relevant instruction and confirmation messages simultaneously through the central service entity 215 and the payment transaction only proceeds if it all participant entities approve. As should be appreciated, the central service entity 215 acts as an orchestration engine to ensure that the settlement of a payment transaction is completed in a secure, quick and efficient manner.

The orchestration engine can also be extended to allow increasing complex scenarios. So long as each settlement partner supports key features, their underlying technology can be radically different. Figure 4d shows further extensions of the transaction system where the central service entity 215 may have access to further groups of data, such as a first group of data 270 relating to the first participant entity 205 or a second group of data 275 relating to the second participant entity 210 to better support the participant entities.

Having described aspects of the disclosure in detail, it will be apparent that modifications and variations are possible without departing from the scope of aspects of the disclosure as defined in the appended claims. As various changes could be made in the above constructions, products, and methods without departing from the scope of aspects of the disclosure, it is intended that all matter contained in the above description and shown in the accompanying drawings shall be interpreted as illustrative and not in a limiting sense. While the disclosure has been described in terms of various specific embodiments, those skilled in the art will recognize that the disclosure can be practiced with modification within the scope of the claims.

Other embodiments will be apparent to those skilled in the art from consideration of the specification and practice of the embodiments disclosed herein. It is intended that the specification and examples be considered as exemplary only.

In addition, where this application has listed the steps of a method or procedure in a specific order, it could be possible, or even expedient in certain circumstances, to change the order in which some steps are performed.

The methods described herein may be encoded as executable instructions embodied in a computer readable medium, including, without limitation, non-transitory computer-readable storage, a storage device, and/or a memory device. Such instructions, when executed by a processor (or one or more computers, processors, and/or other devices) cause the processor (the one or more computers, processors, and/or other devices) to perform at least a portion of the methods described herein. A non-transitory computer-readable storage medium includes, but is not limited to, volatile memory, non-volatile memory, magnetic and optical storage devices such as disk drives, magnetic tape, compact discs (CDs), digital versatile discs (DVDs), or other media that are capable of storing code and/or data.

Where a processor is referred to herein, this is to be understood to refer to a single processor or multiple processors operably connected to one another. Similarly, where a memory is referred to herein, this is to be understood to refer to a single memory or multiple memories operably connected to one another.

The methods and processes can also be partially or fully embodied in hardware modules or apparatuses or firmware, so that when the hardware modules or apparatuses are activated, they perform the associated methods and processes. The methods and processes can be embodied using a combination of code, data, and hardware modules or apparatuses.

Examples of processing systems, environments, and/or configurations that may be suitable for use with the embodiments described herein include, but are not limited to, embedded computer devices, personal computers, server computers (specific or cloud (virtual) servers), hand-held or laptop devices, multiprocessor systems, microprocessor-based systems, set top boxes, programmable consumer electronics, mobile telephones, network personal computers (PCs), minicomputers, mainframe computers, distributed computing environments that include any of the above systems or devices, and the like. Hardware modules or apparatuses described in this disclosure include, but are not limited to, application-specific integrated circuits (ASICs), field-programmable gate arrays (FPGAs), dedicated or shared processors, and/or other hardware modules or apparatuses.

User devices can include, without limitation, static user devices such as PCs and mobile user devices such as smartphones, tablets, laptops and smartwatches.

## Claims

1. A computer-implemented secure transaction processing method, the method performed by a central service entity and comprising the steps of:
receiving, from a first participant entity, a payment instruction message for a payment transaction from the first participant entity to a second participant entity, the payment transaction comprising a payment amount value;
sending a first earmark instruction message to the central settlement entity to create an earmark associated with the payment transaction, wherein the earmark is configured to secure the payment amount value from the first participant entity and to reserve the payment amount value for the second participant entity;
receiving, from the central settlement entity, a first earmark confirmation message confirming that the earmark has been successfully created;
pairing the first earmark confirmation message with the payment instruction message;
sending, to the second participant entity, a credit instruction message comprising the paired earmark confirmation message and the payment instruction message;
receiving, from the second participant entity, a credit confirmation message, wherein the credit confirmation message comprises a clearing indication of whether the payment amount value has been credited by the second participant entity to the account of the customer nominated in the credit instruction message;
sending, to the central settlement entity, a second earmark instruction message, wherein the second earmark instruction message comprises an instruction to release the earmark to complete settlement of the payment transaction or to cancel the earmark to return the secured payment amount value back to the control of the first participant entity; and
receiving, from the central settlement entity, a second earmark confirmation message confirming whether the instructed release or cancellation of the earmark was completed successfully.

2. The method of claim 1 further comprising:
sending, to the first participant entity, a first payment transaction confirmation message; and/or
sending, to the second participant entity, a second payment transaction confirmation message.

3. The method of claims 1 or 2, wherein the first earmark instruction message is sent to the central settlement entity by the first participant entity.

4. The method of claims 1, 2 or 3 further comprising:
creating a payment object to store content of the payment instruction message received from the first participant entity; and
validating the content of the payment object.

5. The method of any of the preceding claims further comprising:
sending, to the second participant entity, a pre-validation request;
receiving, from the second participant entity, a pre-validation response to confirm that the pre-validation check is successful; and
sending, to the first participant entity, a pre-validation confirmation message.

6. The method of any of the preceding claims, wherein the credit confirmation message is received within a predetermined time period from the sending of the credit instruction message.

7. The method of claim 6, wherein the predetermined time period is thirty seconds.

8. The method of any of the preceding claims further comprising communicating with a first intermediary entity between the first participant entity and the central settlement entity and/or a second intermediary entity between the second participant entity and the central settlement entity to process the payment transaction.

9. A computer-implemented secure transaction processing method, the method performed by a central settlement entity and comprising the steps of:
receiving a first earmark instruction message to create an earmark associated with a payment transaction from a first participant entity to a second participant entity, the payment transaction comprising a payment amount value, wherein the earmark is configured to secure the payment amount value from the first participant entity and reserve it for the second participant entity;
verifying the payment amount value with an available funds value associated with the first participant entity;
if the payment amount value is successfully verified, the method further comprising:
creating the earmark;
sending, to a central service entity, a first earmark confirmation message to confirm that the earmark has been successfully created;
receiving, from the central service entity, a second earmark instruction message, wherein the second earmark instruction message comprises an instruction to release the earmark to complete settlement of the payment transaction or to cancel the earmark to return the secured funds to the control of the first participant entity;
releasing or cancelling the earmark to allow the payment transaction to complete or to return the secured payment amount value to the control of the first participant entity respectively;
sending, to the central settlement entity, a second earmark confirmation message confirming whether settlement of the payment transaction has been completed or cancelled.

10. The method of claim 9 further comprising:
sending, to the first participant entity, the first earmark confirmation message and/or the second earmark confirmation message; and/or
sending, to the second participant entity, the second earmark confirmation message.

11. The method of claims 9 or 10, wherein verifying the payment amount value comprises verifying the payment amount value of a first intermediary entity, wherein the first intermediary entity is associated with the first participant entity.

12. The method of claims 9, 10 or 11, wherein if the payment amount value is not successfully verified, the method comprises responding to the first earmark instruction message with an earmark rejection message.

13. The method of any of claims 9 to 12, wherein releasing the earmark comprises transferring the payment amount value from the first participant entity or the first intermediary entity to the second participant entity or a second intermediary entity associated with the second participant entity.

14. A transaction processing system for performing secure payment transactions between a first participant entity and a second participant entity, wherein the transaction processing system comprises a central service entity configured to perform the method of any of claims 1 to 8 and a central settlement entity configured to perform the method of any of claims 9 to 13.

15. A non-transitory computer-readable medium storing instructions that are operable when executed by data processing apparatus in a transaction processing system to perform the method of any of claims 1 to 13.
